# EUROPEAN PATENT SPECIFICATION

(11) **EP 3 349 591 B1**
(45) Date of publication and mention of the grant of the patent: **24.02.2021**
(21) Application number: 16845792.7
(22) Date of filing: 10.05.2016
(51) Int. Cl.: A23J 3/26, A23P 30/20, A23L 3/26, A23L 33/185, A23J 3/14

(54) **MEAT SUBSTITUTE**
FLEISCHERSATZ
SUBSTITUT DE VIANDE

(30) Priority: 14.09.2015 NZ 15712268; 30.11.2015 NZ 15714665
(43) Date of publication of application: 25.07.2018
(73) Proprietor: Sunfed Limited, 1026 Auckland (NZ)
(72) Inventor: LEE, Shama, 1026 Auckland (NZ); HARDACRE, Allan Keith, 1026 Auckland (NZ)
(74) Representative: Raynor, Simon Mark
(86) International application number: PCT/IB2016/052681
(87) International publication number: WO 2017/046659

(56) References cited:
- EP-A1- 0 357 776
- EP-A1- 1 759 593
- WO-A1-2014/110539
- WO-A2-2016/035059
- US-A- 5 437 885
- US-A1- 2012 093 994
- DATABASE WPI Week 201538 Thomson Scientific, London, GB; AN 2015-32001N XP002789528, -& CN 104 473 068 A (HUIZHOU OUYE SCI & TECHNOLOGY CO LTD) 1 April 2015 (2015-04-01)

## Description

### FIELD OF INVENTION

This invention relates to a meat substitute, specifically a meat substitute comprising one or more sources of plant protein and a fruit or fruit powder, or a low allergen meat substitute that is optionally free of soy and optionally free of other allergenic ingredients.

### BACKGROUND TO THE INVENTION

There are a range of meat substitutes available that use plant proteins to form substances having a meat-like texture, typically mimicking or attempting to mimic the fibrous qualities found in animal protein, particularly muscle fibres.

The majority of such products are formed using soy protein, together with a number of other additives to enhance flavour and texture, such as gluten and/or wheat based products.

Soy protein concentrates and isolates are known in the industry as an effective ingredient for use in extrusion processes as soy exhibits particular behaviours that allow formation of meat substitutes having a desirable fibrous texture. For this reason soy is often used, either alone or in combination with other protein powders to form meat substitute products.

US 20080268112 A1 for example discloses a range of different protein powders that may be used in conjunction with a soy protein to form a meat substitute, or combination meat substitute product.

WO 2014081285 entitled "Method for texturizing vegetable fibres and proteins" discloses the use of a plant fibre such as carrot fibre with a high water content in combination with a protein extract such as soy to provide a meat substitute.

EP 1 759 593 A1, US 2012/093994 A1, US 5 437 885 A and WO 2014/110539 A1 also disclose meat analogues as well as methods for their preparation.

Soy is known to act well under extrusion to create a "meat" like texture and has therefore been prevalent in the meat substitute/analogue industry. In addition, gluten is also commonly used to create a product having a suitable texture. However, one disadvantage with such a product is the growing prevalence of allergic reactions or intolerances towards soy, gluten and other ingredients commonly used in the preparation of meat substitutes.

Removing soy presents challenges in the formation of products having a desirable texture and mouth feel and further research is required to determine low allergen ingredients having the characteristics to create a desirable meat substitute.

It is an object of the invention to provide an improved or alternative meat substitute product.

### SUMMARY OF THE INVENTION

Aspects and embodiments of the invention are set out in the appended claims.

The inventions described and claimed herein have many attributes and embodiments including, but not limited to, those set forth or described or referenced in this Summary of the Invention. It is not intended to be all-inclusive and the inventions described and claimed herein are not limited to or by the features or embodiments identified in this Summary of the Invention, which is included for purposes of illustration only and not restriction.

Accordingly, one aspect of the invention relates to an extruded meat substitute composition comprising one or more sources of plant protein, one or more sources of lipid, one or more sources of carbohydrate, and water, the one or more sources of carbohydrate comprising fruit or fruit powder, or a combination thereof,
the extruded meat substitute composition comprising on a dry basis about 50 to about 90% by weight of the one or more sources of plant protein powder, and about 1 to about 15% by weight of the one or more sources of carbohydrate, and
the fruit or fruit powder comprising pumpkin or tomato or a combination thereof,
the extruded meat substitute composition comprising a hardness of about 175 to about 800 kPa and a tensile strength of about 0.5 to about 10 kPa.

Also disclosed herein, not according to the invention and present for illustration purpose only, is an extruded meat substitute composition comprising, consisting essentially of, or consisting of two or more sources of plant protein selected from the group consisting of one or more pea protein powders, one or more chickpea protein powders, one or more broad bean protein powders, and one or more gluten powders, one or more sources of lipid, and water.

Another aspect of the invention relates to a method of producing an extruded meat substitute composition, the method comprising
(1) providing an admixture, preferably comprising one or more sources of plant protein, one or more sources of lipid, water, and one or more sources of carbohydrate, the one or more sources of carbohydrate comprising fruit or fruit powder, or a combination thereof,
(2) extruding the admixture to produce an extruded meat substitute composition,
   the extruded meat substitute composition or admixture comprising on a dry basis about 50 to about 90% by weight of the one or more sources of plant protein powder, and about 1 to about 15% by weight of the one or more sources of carbohydrate, and
   the fruit or fruit powder comprising pumpkin or tomato or a combination thereof.

Another aspect of the invention relates to use of fruit or fruit powder in a method of producing an extruded meat substitute composition to maintain or increase one or more of the tensile strength and hardness of the extruded meat substitute composition, the extruded meat substitute composition comprising on a dry basis about 50 to about 90% by weight of one or more sources of plant protein powder, and about 1 to about 15% by weight of one or more sources of carbohydrate, the one or more sources of carbohydrate comprising fruit or fruit powder, the fruit or fruit powder comprising pumpkin or tomato or a combination thereof.

Any one or more of the following embodiments may relate to any one or more of the above aspects, in any combination.

In various embodiments, the extruded meat substitute composition may comprise fibrous structures, such as a compact fibrous mat resembling cooked animal muscle.

In various embodiments the one or more sources of plant protein may comprise, consist essentially of, or consist of vegetable, fruit, or cereal protein, or any combination of any two or more thereof.

In various embodiments the one or more sources of plant protein may comprise, consist essentially of, or consist of two or more, or three or more, or four or more separate sources of vegetable, fruit, or cereal protein, or any combination of any two or more thereof.

In various embodiments the one or more sources of plant protein may comprise, consist essentially of, or consist of legume, alfalfa, clover, pea, chickpea, cow pea, earth pea, sweet pea, pigeon pea, bean, broad bean, kidney bean, soybean, lentil, lupin, mesquite, cocoa, carob, nut, peanut, almond, potato, gluten, cereal, maize, rice, wheat, wheat gluten, barley, sorghum, millet, oat, rye, triticale, buckwheat, fonio, quinoa, hemp, fungal, algal, or seawead protein, a protein concentrate thereof, a protein isolate thereof, a hydrolysate thereof, or any combination of any two or more thereof. A preferred gluten is cereal gluten, preferably wheat gluten.

For example, the one or more sources of plant protein may comprise protein of seeds of plants of the genus *Vicia, Phaseolus, Vigna, Cicer, Pisum, Lathyrus, Lens, Lablab, Glycine, Psophocarpus, Mucuna, Cyamopsis, Canavalia, Macrotyloma, Lupinus,* or *Arachis,* or any combination of any two or more thereof.

The one or more sources of plant protein may comprise comminuted plant material, such as comminuted vegetable, fruit, or cereal material, a slurry, or a powder. The slurry may comprise at least about 0.1, 1, 5, 10, 20, 30, 40, or 50 % or more solids by weight, and useful ranges may be selected between these values. The powder may be a non-agglomerated, agglomerated, roll-compacted, lyophilised, drum dried, spray dried or foam spray dried powder. The powder may comprise whole tissue, a protein concentrate, or protein isolate.

A whole tissue protein powder, a protein concentrate powder, or a protein isolate powder may comprise at least about 10, 15, 20, 25, 30, 35, 40, 45, 50, 55, 60, 65, 70, 75, 80, 85, 90, 95, 99, or 100 % protein by weight, and useful ranges may be selected between any of these values (for example about 10 to about 100, about 20 to about 100, about 30 to about 100, about 40 to about 100, about 50 to about 100, about 60 to about 100, about 70 to about 100, or about 80 to about 100%).

In various embodiments the one or more sources of plant protein may comprise, consist essentially of, or consist of a first source of plant protein, such as those described herein, and a second separate source of plant protein comprising gluten.

In various embodiments the one or more sources of plant protein may comprise, consist essentially of, or consist of pea protein, chickpea protein, broad bean protein, or gluten, or any combination of any two or more thereof. A preferred gluten is wheat gluten. In one embodiment the source of plant protein may comprise, consist essentially of, or consist of pea protein and gluten, broad bean protein and gluten, chickpea protein and gluten, pea protein, broad bean protein, and gluten, or pea protein, broad bean protein, chickpea protein, and gluten. In one embodiment, the pea protein, broad bean protein, chickpea protein or gluten comprises, consists essentially of, or consists of pea protein powder, broad bean protein powder, chickpea protein powder or gluten powder, the powder optionally comprising a protein concentrate or isolate powder. The powders preferably comprise at least about 60, 65, 70, 75, 80, 85, 90, 95, 99, or 100 % protein by weight, and useful ranges may be selected between any of these values (for example, about 60 to about 100, about 65 to about 100, about 70 to about 100, about 75 to about 100, or about 80 to about 100%).

In various embodiments the one or more sources of lipid may comprise, consist essentially of, or consist of one or more plant oils, one or more animal oils, one or more marine oils, or one or more algal oils, or one or more extracts thereof, or one or more hydrolysates thereof, or any combination of any two or more thereof.

In various embodiments the one or more sources of lipid may comprise, consist essentially of, or consist of a plant fat or oil, such as coconut, corn, cottonseed, canola, rapeseed, olive, palm, peanut, ground nut, safflower, sesame, soybean, sunflower, nut, hazelnut, almond, cashew, macadamia, pecan, pistachio, walnut, melon seed, gourd seed, bottle gourd, buffalo gourd, pumpkin seed, watermelon seed, acai, blackcurrant seed, borage seed, evening primrose, carob seed, amaranth, apricot, argan, artichoke, avocado, babassu, ben, borneo tallow nut, cohune, coriander seed, flax, flax seed, coriander seeds, grape seed, hemp, kapok seed, kiwifruit, lallemantia, meadowfoam seed, linseed, mustard, okra seed, perilla seed, pequi, pine nut, poppyseed, prune kernel, quinoa, ramtil, rice bran, tea, or wheat germ oil, or any combination of any two or more thereof.

In various embodiments a marine oil may comprise, consist essentially of, or consist of shellfish, fish, or marine algal oil, or any combination of any two or more thereof. In one embodiment the fish is selected from anchovy, baikal, bloater, cacha, carp, eel, eulachon, herring, Hoki, hilsa, jack fish, katla, kipper, mackerel, orange roughy, pangas, pilchard, black cod, salmon, sardine, shark, sprat, trout, tuna, whitebait, or swordfish, or any combination of any two or more thereof.

In various embodiments the extruded meat substitute composition or admixture may be substantially free of soy or components derived therefrom.

In various embodiments the extruded meat substitute composition or admixture may be substantially free of gluten or components derived therefrom.

The phrase "substantially free" is intended to mean that a composition described herein contains less than about 1, 0.75, 0.5, 0.25, 0.2, 0.175, 0.15, 0.125, 0.1, 0.075, 0.05, 0.025 or 0.01 % by weight of the stated component (including, for example, soy and/or gluten), and useful ranges may be selected between any of these values (for example, about 0.01 to about 1, about 0.01 to about 0.75, about 0.01 to about 0.5, about 0.01 to about 0.2, about 0.01 to about 0.175, about 0.01 to about 0.15, about 0.01 to about 0.125, about 0.01 to about 0.1, or about 0.01 to about 0.075%).

In various embodiments not according to the invention and present for illustration purpose only, the one or more sources of carbohydrate may comprise, consist essentially of, or consist of plant carbohydrate, plant carbohydrate powder, plant polysaccharide, plant polysaccharide powder, pectin, pectin powder, fruit, fruit powder, fruit pectin powder, *Cucurbitaceae* fruit, *Solanaceae* fruit, *Cucurbitaceae* fruit powder, *Solanaceae* fruit powder, *Cucurbitaceae* fruit pectin powder, *Solanaceae* fruit pectin powder, chia seed extract, or any combination of any two or more thereof.

In various embodiments the fruit may comprise, consist essentially of, or consist of one or more of whole fruit, peeled or skinned fruit, seedless or seed-free fruit, or fruit flesh, or any combination of any two or more thereof.

In various embodiments the fruit may comprise, consist essentially of, or consist of fresh, dried, comminuted, slurried, or powdered fruit, or any combination of any two or more thereof. The powder may comprise a fruit concentrate, isolate, and/or hydrolysate. The powder may be a non-agglomerated, agglomerated, roll-compacted, lyophilised, drum dried, spray dried or foam spray dried powder.

In various embodiments not according to the invention and present for illustration purpose only the fruit may comprise, consist essentially of, or consist of one or more true berry fruits, one or more *Cucurbitaceae* fruits, one or more *Solanaceae* fruits, one or more *Solanoideae* fruits, one or more citrus fruits, one or more aggregate fruits, one or more multiple fruits, one or more accessory fruits, or any combination of any two or more thereof,

According to the invention, the fruit or fruit powder comprise pumpkin or tomato or a combination thereof.

In various embodiments not according to the invention and present for illustration purpose only the fruit may comprise, consist essentially of, or consist of one or more *Cucurbitaceae* fruits, one or more *Solanaceae* fruits, or one or more *Solanoideae* fruits, or any combination of any two or more thereof.

In various embodiments not according to the invention and present for illustration purpose only the fruit may comprise, consist essentially of, or consist of one or more *Cucurbitaceae* fruits selected from cucumber, gourd, melon, pumpkin, or squash, or any combination of any two or more thereof. In one embodiment the fruit comprises, consists essentially of, or consists of *Cucurbitaceae* fruit flesh powder.

In various embodiments not according to the invention and present for illustration purpose only the fruit may comprise, consist essentially of, or consist of one or more *Solanoideae* fruits selected from tomato, potato, eggplant, or *Capsicum* spp., or any combination of any two or more thereof. In one embodiment the fruit comprises, consists essentially of, or consists of *Solanoideae* fruit flesh powder.

In a preferred form not according to the invention and present for illustration purpose only the fruit extract includes fruit derived from the *Cucurbitaceae* family or *Solanaceae* family.

Not according to the invention and present for illustration purpose only the fruit extract includes extracts derived from tomato, gourd, eggplant and capsicum from the *Solanaceae* family and pumpkin, gourd, cucumber and squash from the *Cucurbitaceae* family.

In a preferred form of the invention the fruit extract is pumpkin powder derived from the *Curcubita* genus of plant.

More preferably, the pumpkin powder is derived from *Curcubita maxima, Curcubita pepo or Curcubita moschata.*

Even more preferably the pumpkin powder is derived from *Curcubita maxima.*

In various embodiments not according to the invention and present for illustration purpose only, the extruded meat substitute composition or admixture may comprise, consist essentially of, or consist of at least about 20, 25, 30, 35, 40, 45, 50, 55, 60, 65, 70, 75, 80, 85, or 90 % by weight on a dry basis of one or more sources of plant protein, and useful ranges may be selected between any of these values (for example, about 20 to about 90, about 30 to about 90, about 40 to about 90, about 50 to about 90, about 60 to about 90%).

In various embodiments the extruded meat substitute composition or admixture may comprise, consist essentially of, or consist of, on a dry basis,
(1) about 50 to about 90% by weight plant protein powder, preferably pea protein powder, or
(2) about 50 to about 90% by weight broad bean protein powder, or
(3) about 50 to about 90% by weight chickpea protein powder, or
(4) about 50 to about 90% of a mixture of pea protein powder and gluten powder, or
(5) about 50 to about 90% of a mixture of broad bean protein powder and gluten powder, or
(6) about 50 to about 90% of a mixture of chickpea protein powder and gluten powder, or
(7) about 50 to about 90% of a mixture of pea protein powder, broad bean protein powder, and gluten powder, or
(8) about 50 to about 90% of a mixture of chickpea protein powder, broad bean protein powder, and gluten powder, or
(9) about 50 to about 90% of a mixture of pea protein powder, chickpea protein powder, and gluten powder, or
(10) about 50 to about 90% of a mixture of pea protein powder, broad bean protein powder, chickpea protein powder, and gluten powder.

In various embodiments, the pea protein powder, broad bean protein powder, chickpea protein powder, or gluten powder may comprise, consist essentially of, or consist of about 60 to about 100% by weight protein.

In various embodiments, the extruded meat substitute composition or admixture may comprise, consist essentially of, or consist of about 1, 2, 3, 4, 5, 6, 7, 8, 9, 10, 11, 12, 13, 14, or 15 % by weight on a dry basis of one or more sources of lipid, and useful ranges may be selected between any of these values (for example, about 1 to about 15, about 2 to about 12, about 3 to about 10, about 3 to about 8%).

In various embodiments, the extruded meat substitute composition or admixture may comprise, consist essentially of, or consist of about 1, 2, 3, 4, 5, 6, 7, 8, 9, 10, 11, 12, 13, 14, or 15% by weight on a dry basis of one or more sources of carbohydrate, and useful ranges may be selected between any of these values (for example, about 1 to about 15, about 2 to about 12, about 2 to about 10, about 2 to about 8, about 3 to about 10, about 3 to about 8%).

In various embodiments, the extruded meat substitute composition or admixture may comprise, consist essentially of, or consist of about 1, 2, 3, 4, 5, 6, 7, 8, 9, 10, 11, 12, 13, 14, or 15% by weight on a dry basis fruit or fruit powder, and useful ranges may be selected between any of these values (for example, about 1 to about 15, about 1 to about 12, about 1 to about 10, about 1 to about 8, about 2 to about 10, about 2 to about 8, about 2 to about 6%). The fruit comprises pumpkin powder and/or tomato powder.

In various embodiments (in embodiments according to the invention, the fruit or fruit powder comprises pumpkin or tomato or a combination thereof) the extruded meat substitute composition or admixture may comprise, consist essentially of, or consist of, on a dry basis,
(1) about 50 to about 90% by weight plant protein powder, preferably pea protein powder, and about 1 to about 10 or about 15% by weight carbohydrate powder, preferably fruit or fruit powder, or
(2) about 50 to about 90% broad bean protein powder, and about 1 to about 10 or about 15% by weight fruit or fruit powder, or
(3) about 50 to about 90% by weight chickpea protein powder, and about 1 to about 10 or about 15% by weight fruit or fruit powder, or
(4) about 50 to about 90% of a mixture of pea protein powder and gluten powder, and about 1 to about 10 or about 15% by weight fruit or fruit powder, or
(5) about 50 to about 90% of a mixture of broad bean protein powder and gluten powder, and about 1 to about 10 or about 15% by weight fruit or fruit powder, or
(6) about 50 to about 90% of a mixture of chickpea protein powder and gluten powder, and about 1 to about 10 or about 15% by weight fruit or fruit powder, or
(7) about 50 to about 90% of a mixture of pea protein powder, broad bean protein powder, and gluten powder, and about 1 to about 10 or about 15% by weight fruit or fruit powder, or
(8) about 50 to about 90% of a mixture of chickpea protein powder, broad bean protein powder, and gluten powder, and about 1 to about 10 or about 15% by weight fruit or fruit powder, or
(9) about 50 to about 90% of a mixture of pea protein powder, chickpea protein powder, and gluten powder, and about 1 to about 10 or about 15% by weight fruit or fruit powder, or
(10) about 50 to about 90% of a mixture of pea protein, broad bean protein, chickpea protein powder, and gluten powder, and about 1 to about 10 or about 15% by weight fruit or fruit powder.

As above, in various embodiments, the pea protein powder, broad bean protein powder, or gluten powder comprises, consists essentially of, or consists of about 60 to about 100% by weight protein.

The fruit or fruit powder 2. is be *Cucurbitaceae* fruit or fruit powder, according to the invention pumpkin or pumpkin powder, or *Solanaceae* fruit or fruit powder, according to the invention tomato or tomato powder.

In various embodiments, the admixture before or during extrusion may comprise, consist essentially of, or consist of at least about 30, 35, 40, 45, 50, 55, 60, 65, 70, or 75 % by weight water, and useful ranges may be selected between any of these values (for example, about 30 to about 60, about 30 to about 65, about 30 to about 70, or about 30 to about 75).

In various embodiments, the extruded meat substitute composition may comprise, consist essentially of, or consist of about at least about 30, 35, 40, 45, 50, 55, 60, 65, 70, or 75 % by weight water, and useful ranges may be selected between any of these values (for example, about 30 to about 60, about 30 to about 65, about 30 to about 70, or about 30 to about 75).

In various embodiments, extrusion may be carried out in an extruder comprising two or more barrel sections preceding an extrusion die, and extrusion may be carried out at a temperature of up to about 100, 110, 120, 130, 140, 150, 16, 170, 180, 190, or 200 °C in one or more of the barrel sections preceding the extrusion die, and useful ranges may be selected between any of these values (for example, about 100 to about 200, about 110 to about 190, about 110 to about 180).

Not according to the invention and present for illustration purpose only, the meat substitute includes 0.1 - 15% of pumpkin powder as dry ingredients. In a preferred embodiment of the invention, the meat substitute includes 1 - 5% of pumpkin powder as dry ingredients.

In further embodiments the meat substitute further includes tomato extract. More preferably the tomato extract is tomato powder. Even more preferably, the meat substitute includes 1 - 5% of tomato powder as dry ingredients.

In further preferred embodiments of the invention the plant derived protein extract is selected from pea, broad bean, potato, rice, lupin, water lentil, chickpea, and/or oat.

More preferably the meat substitute comprises dry ingredients having at least 75% by weight of a protein extract.

More preferably, the protein extract is pea protein.

Alternatively the dry ingredients comprise 20 -80% by weight pea protein extract and/or 20 - 80% by weight broad bean protein extract.

More preferably the dry ingredients comprise 40 - 60% by weight pea protein and/or 20 - 60% by weight broad bean protein extract.

Preferably the lipid is selected from rice bran oil, coconut oil, sunflower oil, canola oil, flax seed oil and palm oil or algae oil.

In a preferred formulation, the extruded meat substitute includes 75 - 85% by weight pea protein.

In various embodiments the extruded meat substitute composition or admixture may further comprise, consist essentially of, or consist of one or more gums such as a plant gum. In various embodiments the gum may be selected from the group comprising xanthan gum, agar, alginate, cassia, dammar, pectin, beta-glucan, glucomannan, mastic, chicle, psyllium, spruce gum, gellan gum, acacia gum, guar gum, locust bean gum, carrageenans, gum arabic, karaya gum, ghatti gum, tragacanth gum, konjac gum, tara gum, pullulan, chia seed gum, fatted chia gum (FCG), or partially defatted chia gum (PDCG), or any combination of any two or more thereof.

In various embodiments, the extruded meat substitute composition or admixture may further comprise, consist essentially of, or consist of about 1, 2, 3, 4, 5, 6, 7, 8, 9, or 10 % by weight on a dry basis of one or more gums, and useful ranges may be selected between any of these values (for example, about 1 to about 10, about 2 to about 10, about 3 to about 10, about 3 to about 8%).

In various embodiments the extruded meat substitute composition or admixture may further comprise, consist essentially of, or consist of one or more food grade starches, such as a cereal starch, rice starch, wheat starch, maize starch, potato starch, cassava starch, or any combination of any two or more thereof.

In various embodiments, the extruded meat substitute composition or admixture may comprise, consist essentially of, or consist of about 1, 2, 3, 4, 5, 6, 7, 8, 9, or 10 % by weight on a dry basis of one or more food grade starches, and useful ranges may be selected between any of these values (for example, about 1 to about 10, about 2 to about 10, about 3 to about 10, about 3 to about 8%).

More preferably, the formulation further includes xanthan gum and/or pectin and/or konjac corm powder.

In further preferred embodiments the meat substitute composition includes chia seed extract. More preferably the meat substitute composition includes chia seed gum. More preferably the gum is fatted chia gum (FCG) or partially defatted chia gum (PDCG).

Preferably, the meat substitute is substantially free of wheat or wheat derived products.

In one embodiment the invention relates to an extruded meat substitute composition formed from a plant derived protein extract, a lipid, water and chia seed extract, wherein the composition is substantially free of soy or components derived therefrom.

Preferably, the extruded meat substitute is substantially free of gluten or components derived therefrom.

In further embodiments not according to the invention and present for illustration purpose only the meat substitute composition includes chia seed gum. The gum is a fraction of chia seed gum selected from fatted chia gum (FCG) or partially defatted chia gum (PDCG).

In one embodiment the invention relates to an extruded meat substitute composition formed from a plant derived protein extract, a lipid, water and tomato extract, wherein the composition is substantially free of soy or components derived therefrom.

Preferably, the extruded meat substitute is substantially free of gluten or components derived therefrom.

Preferably, the meat substitute is substantially free of wheat or wheat derived products. In an embodiment not according to the invention and present for illustration purpose only, the meat substitute includes 0.1 - 15% of tomato powder as dry ingredients. In a preferred embodiment of the invention, the meat substitute includes 1 - 5% of tomato powder as dry ingredients.

In various embodiments the extruded meat substitute composition may further comprise, consist of, or consist essentially of one or more flavourings, one or more spices, one or more colourings, one or more micronutrients, one or more vitamins, one or more minerals, one or more emulsifiers, one or more stabilisers, one or more antioxidants, or one or more texturisers, or any combination of any two or more thereof. Such ingredients are well known in the art.

In various embodiments, the extruded meat substitute composition or admixture may comprise, consist essentially of, or consist of about 0.1, 1, 2, 3, 4, 5, 6, 7, 8, 9, or 10 % by weight on a dry basis of any of such ingredients, and useful ranges may be selected between any of these values (for example, about 0.1 to about 10, about 1 to about 10, about 2 to about 10, about 3 to about 10, about 3 to about 8%).

In various embodiments the one or more flavourings may comprise, consist of, or consist essentially of one or more animal meat flavours, such as chicken, beef, lamb, or pork flavours, a yeast extract, or salt, onion, or garlic flavours, or any combination of any two or more thereof.

In various embodiments the extruded meat substitute composition may comprise a hardness of about 175, 200, 225, 250, 275, 300, 325, 350, 375, 400, 425, 450, 475, 500, 525, 550, 575, 600, 625, 650, 675, 700, 725, 750, 775, or 800 kPa, when a 4 by 20 by 30 mm portion is subjected to a Warner Bratzler blade shear test from a blade height of 40mm, at a test speed of 1mm.s⁻¹, a pre-test speed of 10mm.s⁻¹ and a post-test speed of 2mm.s⁻¹, and useful ranges may be selected between any of these values (for example, about 175 to about 800 kPa).

In various embodiments the extruded meat substitute composition may comprise a tensile strength of about 0.5, 1, 1.5, 2, 2.5, 3, 3.5, 4, 4.5, 5, 5.5, 6, 6.5, 7, 7.8, 8, 8.5, 9, 9.5, or 10 kPa, when a 4 by 10 by 80 mm portion is subjected to a stretch test clamped between grips 40mm apart, at a test speed of 0.5mm.s⁻¹, a pre-test speed of 1mm.s⁻¹ and a post-test speed of 10mm.s⁻¹, and useful ranges may be selected between any of these values (for example, about 0.5 to about 10, about 1 to about 10, about 1.5 to about 10, or about 2 to about 10).

The term "comprising" as used in this specification means "consisting at least in part of". When interpreting each statement in this specification that includes the term "comprising", features other than that or those prefaced by the term may also be present. Related terms such as "comprise" and "comprises" are to be interpreted in the same manner.

It is intended that reference to a range of numbers disclosed herein (for example, 1 to 10) also incorporates reference to all rational numbers within that range (for example, 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7) and, therefore, all sub-ranges of all ranges expressly disclosed herein are hereby expressly disclosed. These are only examples of what is specifically intended and all possible combinations of numerical values between the lowest value and the highest value enumerated are to be considered to be expressly stated in this application in a similar manner.

Further aspects of the invention, which should be considered in all its novel aspects, will become apparent to those skilled in the art upon reading of the following description which provides at least one example of a practical application of the invention.

### BRIEF DESCRIPTION OF THE DRAWINGS

One or more embodiments of the invention will be described below by way of example only, and without intending to be limiting, with reference to the following drawings, in which:

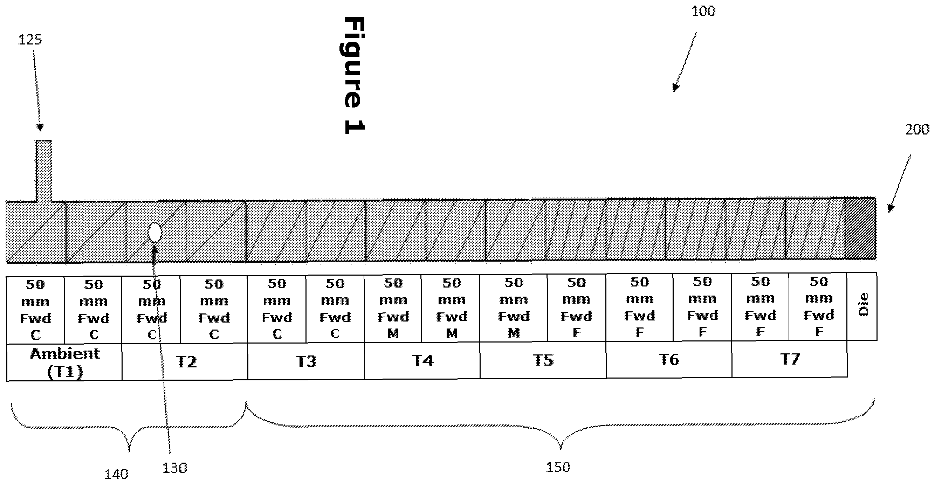

Figure 1 shows a diagram of the extrusion process of the current invention.

### BRIEF DESCRIPTION OF PREFERRED EMBODIMENTS OF THE INVENTION

The meat substitute formulation of the present invention has been developed as an improved formulation that produces an extruded meat substitute having improved characteristics of texture, resilience, moisture and mouth feel over existing products. The preferred product of the present invention is a low allergen product, preferably formed without soy or without soy and gluten, each of which are well known allergens.

One of the important factors in producing a meat substitute product that will appeal to both vegetarian and non-vegetarian consumers is the texture of the product. The ideal meat substitute has the fibrous quality of meat, while retaining moisture and flavour during cooking.

The use of known extrusion processes to create such meat substitutes are well known, however individual ingredients used within the formulations can perform quite differently when subject to the mixing, heating, and high shear pressures associated with extrusion, resulting in a wide variety in the quality of the product.

Soy has long been used as the plant protein of choice to create meat substitutes. Soy performs very well in the extrusion process and typically produces chicken like compositions having a fibrous structure. Soy is widely used due to its important functional properties such as the gelling/textural capabilities, water absorption, fat absorption, emulsification, elasticity, and colour control that soy brings to the final products.

Without the use of soy, the formation of such fibrous meat substitutes is more difficult. Soy-free products on the market today are typically in the form of meat substitute crumbles, or ground meat substitutes which don't have the same texture requirements as a chunk or slice of meat substitute does, as each piece is too small for aligned fibres to be required.

Similarly, gluten plays an important role in producing a high quality extruded meat substitute, improving structure within the product, reducing moisture loss and improving flavour using its ingredient carrying capabilities.

It has therefore been a challenge of the present invention to develop a product maintaining the characteristics of the traditional soy and gluten based product, while optionally omitting these two allergenic ingredients in certain embodiments.

The inventors have discovered that use of two or more sources of plant protein, or the introduction of one or more sources of carbohydrate such as a fruit extract, preferably having soluble fibre in the form of pectin, may aid in meat substitutes having improved overall textures, particularly in the absence of soy proteins. In particular, plant proteins such as pea and bean, and fruit extracts from the families *Cucurbitaceae* and *Solanaceae* appear to produce particularly effective results. More specifically, the addition of pumpkin powder and/or tomato powder to the formulation has resulted in significant improvements in the way the product performs during the extrusion process and in the characteristics of the final product, in the absence of soy, or soy and gluten.

Pumpkin powder is produced from the fruit of the genus of herbaceous vine *Curcubita,* while tomato powders are produced from the fruit of nightshade genus *Solanum.* Industrially, both pumpkin and tomato powder are formed by the application of a thin film of liquid onto a heated drum resulting in cold water soluble powder, which is then drum dried.

Pumpkin powder is typically used as a substitute for fresh pumpkin and can be reconstituted with water to produce a pumpkin puree. It is also known for use in baking to produce a pumpkin flavour or colour.

Similarly, tomato powder can be used to impart a range of colours to product depending on the species of tomato used.

It has since been determined by the inventors that the addition of an amount of pumpkin powder and/or tomato powder in an extruded non-soy meat substitute produces not only an attractive colour, but improves the quality and texture of the finished extruded product.

A number of different pumpkin powder varieties are available on the market, manufactured from a range of different pumpkin species. The most common species available in the powder form are *Curcubita Pepo, Curcubita maxima,* or *Curcubita moschata,* with powder used in the current invention preferably derived from the flesh of the pumpkin. However, powder derived from the seed portion, skin or combinations thereof are also considered to fall within the scope of this invention.

Of the pumpkin varieties available, *Curcubita maxima* (*C*. *maxima*) has shown to have specific properties over and above those of other *Curcubita* varieties that result in extruded meat substitute products having particularly appealing textures and moisture retention. It should be understood by those skilled in the art that while *C*. *maxima* has particularly favourable properties over other particular types of pumpkin, the addition of pumpkin powder itself, derived from any *Curcubita* variety is expected to impart improvements in extruded meat substitute products over and above known ingredients and should be considered to fall within the scope of this invention.

The composition of *C*. *maxima* pumpkin when compared to *Curcubita Pepo or Curcubita moschata,* has been determined in a first instance by the Ministry for Agriculture, Forestry and Fisheries in the Republic of Korea. A breakdown of the compositions found in this study is seen below.

**Table 1. Chemical composition (g/kg raw weight) of pumpkins by species and part.**

| Nutrients | Part | Species | | |
|---|---|---|---|---|
| | | *C*. *pepo* | *C*. *moschata* | *C*. *maxima* |
| Carbohydrate | Flesh | 26.23 ± 0.20^{a} | 43.39 ± 0.84^{b} | 133.53 ± 1.44^{c} |
| | Peel | 43.76 ± 0.74^{a} | 96.29 ± 1.11^{b} | 206.78 ± 3.25^{c} |
| | Seed | 122.20 ± 7.41^{a} | 140.19 ± 7.60^{b} | 129.08 ± 8.25^{ab} |
| Protein | Flesh | 2.08 ± 0.11^{a} | 3.05 ± 0.65^{a} | 11.31 ± 0.95^{b} |
| | Peel | 9.25 ± 012^{a} | 11.30 ± 0.99^{a} | 16.54 ± 2.69^{b} |
| | Seed | 306.83 ± 12,06^{b} | 298.11 ± 14.75^{ab} | 274.85 ± 10.04^{a} |
| Fat | Flesh | 0.55 ± 0.14^{a} | 0.89 ± 0.11^{b} | 4.20 ± 0.23^{c} |
| | Peel | 4.71 ± 0.69^{a} | 6.59 ± 0.41^{b} | 8.69 ±0.99^{c} |
| | Seed | 439.88 ± 2.88^{a} | 456.76 ± 11.66^{b} | 524.34 ± 1.32^{c} |
| Fiber | Flesh | 3.72 ± 0.02^{a} | 7.41 ± 0.07^{b} | 10.88 ± 0.35^{c} |
| | Peel | 12.28 ± 0.15^{a} | 34.28 ± 1.37^{c} | 22.35 ± 0.01^{b} |
| | Seed | 148.42 ± 0.55^{b} | 108.51 ± 8,36^{a} | 161,54 ± 6,79^{c} |
| Ash | Flesh | 3.44 ± 0.04^{a} | 10.36 ± 0.01^{b} | 10.53 ± 0.11^{c} |
| | Peel | 6.30 ± 0.06^{a} | 13.96 ± 0,16^{c} | 11.20 ± 0,64^{b} |
| | Seed | 55.02 ± 1.00^{c} | 53.15 ± 0.20^{b} | 44.22 ± 0.36^{a} |
| Moisture | Flesh | 967.70 ± 0.15^{c} | 942.31 ± 0.08^{b} | 840.43 ± 0.17^{a} |
| | Peel | 935.98 ± 0.27^{c} | 871.86 ± 0.09^{b} | 756.79 ± 0.44^{a} |
| | Seed | 74.06 ± 0.91^{c} | 51.79 ± 6.04^{b} | 27.51 ± 0.21^{a} |

| | | | | |
|---|---|---|---|---|
| *¹⁾ Values are mean ± SD. Different superscript letters within a row indicate significant differences by Duncan's multiple range test (*P < *0.05).* | | | | |

When compared to *Curcubita Pepo or Curcubita moschata,* the flesh of *C*. *maxima* has a higher percentage of carbohydrate, fat, protein and fibre. The overall moisture content is less, however as the product is to be used in powder form during the manufacturing process, this is less important.

In addition to the percentages of fat, protein and carbohydrate in the pumpkin. *C. maxima* has been shown to have a greater pectin content when compared to *C.moschata.* A study by Gonçalves, E.M *et al* from DTIA, Instituto Nacional de Engenharia, Tecnologia e Inovação. Portugal *entitled* " INFLUENCE OF MATURITY STAGE ON TEXTURE, PECTIN COMPOSITION AND

MICROSTRUCTURE OF PUMPKIN", while primarily looking at the changes in pectin levels during pumpkin storage, also concluded that *C*. *maxima,* when compared to *C. moschata* has both a higher pectin level, and a higher ratio of water soluble fraction and total pectin as a percentage.

Water soluble fibre such as pectin is thought to improve the performance of the meat substitutes during the extrusion process, and impart improved characteristics to the structure and alignment of the plant protein fibres. The pectin provided in fruit extracts such as those disclosed herein result in improved non-soy meat substitute formulations that have yet to be achieved elsewhere. Selection of extracts such as *C.maxima* that can provide increased levels of such macronutrients will further enhance the performance of the ingredients in the final products.

A number of trials have been conducted to determine if the addition of pumpkin powder, specifically

*C. maxima* results in the formation of improved soy free, and/or soy free and gluten free meat substitute products.

### EXAMPLES

The pumpkin powder used in the following examples is *C*. *maxima* pumpkin powder, however pumpkin powders from a range of different species may be used as they are still thought to provide improved quality of meat substitutes over meat substitutes without pumpkin powder. Other powders and ingredients were commercially available plant protein powders and ingredients.

A range of different products have been trialed using a number of soy protein alternatives, together with products including and excluding gluten. Initial trials with the addition of pumpkin powder to the formulations have been undertaken and seven samples prepared and analysed.

Each sample was extruded using the basic process as described below. The resulting products were evaluated and the characteristics of each scored to determine the best formulation.

### Process

The meat substitutes exemplified in the present invention are formed using an extrusion process which is described in further detail below with regard to Figure 1, which shows the extruder 100 used for the extrusion of the samples below. The extruder used in this work is a Clextral BC21 co-rotating twin-screw extruder with a 700mm long barrel that is capable of processing about 8kg of extruded meat substitute per hour, however this is not intended to be limiting and may change as required.

As can been seen from Figure 1, the screw pitch from the feed section 140 to the die section 150 the screw profile changes from coarse to fine pitch. The extruder is driven by an electrical motor that rotates the two screws at variable speed. T1 and T2 show the feed and mixing sections, T3 to T6 show the heating and compression sections, and T7 the die conditioning section.

During extrusion processing dry ingredients are fed into the heated barrel of the extruder 100 at ambient temperature T1 at a constant rate from a mass flow feeder 125.

The dry ingredients are then mixed with water at water injection point 130. The water is introduced at a constant rate approximately 100 mm down the barrel from the screws.

As the ingredients move through the process the temperature of the sections increase and the ingredients are exposed for a short period to high temperature, pressure and shear.

Upon the application of heat, shear and pressure the protein material is denatured and aligns into fibres that resemble meat.

The denatured fibres then progress into die section 200. Die 200 is preferably a water cooled die where the hot product containing up to 60 % moisture is cooled and fibration and texturisation of the product is finalised.

The extruded product is then cut into the required size as determined by the potential end use, for example cubes, slices, strips or chunks, packaged and stored under standard conditions.

### Texture analysis

A Stable Micro Systems texture analyser (SMS TaXT-2+) is used to measure the hardness and tensile strength of the samples.

When analysis is conducted on fried samples, the frying process is conducted after cooking the samples using a stovetop and an oiled pan. Substitute samples are fried for approximately one minute on each side, while any meat control sample is fried until cooked through.

### Cutting

Samples are cut to about 4 mm thick, 10-20 mm wide and about 30 mm long. The texture analyser is fitted with a straight shearing knife blade (Warner Bratzler blade, HDP/WBR). The initial height of the blade is set to 40mm, with a test speed of 1mm.s⁻¹, a pre-test speed of 10mm.s⁻¹ and a post-test speed of 2mm.s⁻¹. One sample is placed under the blade at a time and the test is started. The hardness (kPa) of the sample is measured, taken to be the maximum force required to cut the sample.

Fried chicken was found to have a hardness in the order of 100-125 kPa.

### Stretching

Samples are cut to about 4 mm thick, 10-20 mm wide, and 60-80 mm long. The texture analyser is fitted with two tensile grips. The distance between the grips is set to 40mm, with a test speed of 0.5mm.s⁻¹, a pre-test speed of 1mm.s⁻¹ and a post-test speed of 10mm.s⁻¹. One sample is placed between the clamps at a time, with the clamps being tightened to the point where the sample is held so as to not slip out when stretched, but not so tight as to crush the sample. The test is started and the tensile strength (kPa) of the sample is measured, taken to be the maximum force required to fracture the sample.

Fried chicken was found to have a tensile strength in the order of 6-8 kPa.

### Sample 1

The first sample prepared was a standard soy and gluten containing product, produced without any pumpkin powder as a baseline for comparing the new formulations.

**Table 2. Sample 1 ingredients (% by weight, dry basis)**

| **Soy protein** | **Gluten** | **Starch** | **Vegetable Oil** | **Flavouring** |
|---|---|---|---|---|
| 50 - 60 | 25 -35 | 1 - 5 | 5-10 | 1-5 |

### Sample 2 and 3

The second and third samples prepared substitute the soy protein for pea protein and broad bean protein and include the addition of pumpkin powder.

**Table 3. Sample 2 and 3 ingredients (% by weight, dry basis)**

| **Sample no.** | **Pea protein** | **Broad bean protein** | **Gluten** | **Starch** | **Vegetable Oil** | **Pumpkin powder** | **Flavouring** |
|---|---|---|---|---|---|---|---|
| **2** | 50-60 | - | 25-35 | 1-5 | 5-10 | 1-5 | 1-5 |
| **3** | - | 50-60 | 25-35 | 1-5 | 5-10 | 1-5 | 1-5 |

### Samples 4 - 7

Samples 4-7 show a number of soy and gluten free formulations tested and the corresponding results. All formulations include pumpkin powder (*C*. *maxima*) with variations in the remaining ingredients evaluated.

**Table 4. Sample 4-7 ingredients (% by weight, dry basis)**

| **Sample** | **Pea protein** | **Broad Bean Protein** | **Starch** | **Vegetable Oil** | **Pumpkin powder** | **Flavouring** | **Pectin** | **Xanthan Gum** |
|---|---|---|---|---|---|---|---|---|
| **4** | 80-90 | - | 1-5 | 5-10 | 1-5 | 1-5 | - | - |
| **5** | - | 80-90 | 1-5 | 5-10 | 1-5 | 1-5 | - | - |
| **6** | 80-90 | - | 1-5 | 5-10 | 1-5 | 1-5 | 0.1-1 | 0.1-1 |
| **7** | - | 80-90 | 1-5 | 5-10 | 1-5 | 1-5 | 0.1-1 | 0.1-1 |

### Evaluation

The resulting products were evaluated according to their similarity with real pieces of chicken using a range of criteria as set out below, and texture may be analysed as set out above. The criteria were weighted according to importance and the results collated. For each criteria, a score of -5 to +5 was selected and the score multiplied by the weight to arrive at the total weighted score.

**Table 5. Evaluation criteria**

| | |
|---|---|
| **Taste** (**uncooked)** | Tastes like steamed chicken (flavour) |
| **Texture (uncooked)** | Feels like steamed chicken (hardness (N), springiness (mm), chewiness (N), cohesiveness (mm), cutting force (N/mm) and extensibility (mm)) |
| **Aroma** (**uncooked)** | Smells like chicken |
| **Colour (uncooked)** | Looks like chicken |
| **Cooking** | Cooks like chicken (behaviour under heat, sizzle, browning, flavour absorption) |
| **Taste (cooked)** | Tastes like cooked chicken (flavour) |
| **Texture (cooked**) | Feels like cooked chicken (hardness (N), springiness (mm), chewiness (N), cohesiveness (mm), cutting force (N/mm) and extensibility (mm)) |
| **Aroma (cooked)** | Smells like cooked chicken |
| **Colour (cooked)** | Looks like cooked chicken |

**Table 6. Sample analysis weighted results**

| **Factors** | | **Sample** | | | | | | |
|---|---|---|---|---|---|---|---|---|
| **Criteria** | **Wt.** | **1** | **2** | **3** | **4** | **5** | **6** | **7** |
| Taste (uncooked) | 3.0 | 0 | 2 | 2 | 1 | 1 | 1 | 1 |
| Texture (uncooked) | 3.0 | 3 | 2 | 2 | 1 | 1 | 1 | 1 |
| Aroma (uncooked) | 1.0 | -3 | 0 | 0 | 0 | 0 | 0 | 0 |
| Colour (uncooked) | 1.0 | 2 | -2 | -2 | -2 | -2 | -2 | -2 |
| Cooking | 1.0 | 2 | 2 | 2 | 1 | 1 | 1 | 1 |
| Taste (cooked) | 3.0 | 0 | 2 | 2 | 2 | 1 | 2 | 1 |
| Texture (cooked) | 3.0 | 1 | 3 | 2 | 1 | 2 | 1.5 | 2.5 |
| Aroma (cooked) | 1.0 | -2 | 0 | 0 | 0 | 0 | 0 | 0 |
| Colour (cooked) | 1.0 | 2 | -2 | -2 | -2 | -2 | -2 | -2 |
| **Weighted Scores** | | 13.0 | 25.0 | 22.0 | 13.0 | 13.0 | 14.5 | 13.0 |

Samples 2 and 3 show the favourable results of a soy-free formulation containing gluten in similar quantities to the soy and gluten containing sample 1. The addition of the pumpkin powder to the formulation appears to have resulted in the product having an overall improved score when assessed on the texture, taste and aroma when compared to the soy and gluten formulation. These results give a good indication of the benefits pumpkin powder is imparting to the final product, as the similarity in gluten quantities between samples 1, 2 and 3 has stayed very similar.

Samples 4-7 show favourable characteristics that are similar to those found in the soy and gluten containing product (sample 1), with weighted scores higher when based on taste and texture scores. These samples 4-7 were formed using either broad bean protein or pea protein. This indicates that the manufacture of a low allergen meat substitute that includes pumpkin powder that performs as well, if not better than a soy and gluten containing alternative is possible.

Early results also indicate that the removal of soy and the addition of a different protein, together with pumpkin powder produces a product having distinctly improved aroma.

Based in the experimental data to date, the addition of pumpkin powder to the formulations, in conjunction with other ingredients may be a key factor in producing a favourable low allergen meat substitute.

Based on the results provided the addition of xanthan gum and pectin provides further structure to the products. In a further alternative embodiment of the invention the meat substitute composition includes the addition of Konjac corm powder (or Konjac root powder). Konjac corm powder is obtained from the tubers of various species of Amorphophallus. It is a soluble dietary fiber that is similar to pectin in structure and function and consists mainly of a hydrocolloidal polysaccharide, glucomannan. Addition of Konjac corm powder also resulted in providing further structure to the product. Pectin, xanthan gum and konjac corm powder are soluble fibres, suggesting that increases in soluble fibre in the formulations provides beneficial results during the extrusion process.

When compared to *C.pepo* and *C*. *moschata, C. maxima* has significantly higher levels of fibre in the flesh and even greater levels in the seed powder.

The addition of pumpkin powder to the meat substitutes of the present invention aides in uptake of moisture and flavour during the cooking process, providing a more satisfying and tastier final product. The increased levels of carbohydrate, fibre, fat and protein in *C. maxima* provide improvements in the overall structure of the finished product, with carbohydrate and fibre levels in particular resulting in a more resilient, better textured product.

The addition of pumpkin powder to the meat substitutes of the present invention may also aid in increasing the shelf life of the product. Pumpkin powder is known to have antibacterial properties, which in turn may result in the reduction of pathogenic growth during storage.

In replacing soy in the present invention, a range of different vegetable proteins may be used, including pea, broad bean, chick pea, potato, rice, lupin, water lentil or oat. Each of these protein isolates may substitute soy in the meat substitutes of the present invention, with the quantities of pumpkin powder used with each of the different protein isolates.

In an alternative formulation of the invention, the meat substitute includes tomato extract, preferably in the form of tomato powder derived from either the flesh or seeds of the tomato. Tomato powder contains similar levels of carbohydrate, fat and protein to pumpkin powder and may be sourced in a range of colours.

The inclusion of tomato powder either in place of pumpkin powder, or in conjunction with pumpkin powder allows for the colour of the meat substitute to be altered. This is particularly useful when forming meat substitutes to replace different types of meat. For example, a chicken substitute may be best formed using a larger proportion of the yellow pumpkin powder, or a tomato powder formed from a yellow tomato species, while a beef substitute may include a dark red tomato powder which will impart a deeper colour to the meat substitute to more effectively resemble a beef product.

Similarly, the relative compositions of pumpkin and tomato powder may be altered to produce varying colours within the extruded product.

In a further alternative embodiment, not according to the invention and present for illustration purpose only, of the invention the meat substitute composition includes chia seed (*Salvia hispanica L.*) extract. Chia seed gum is the preferred extract given its smoothness, compared to the use of ground chia seed which can produce small particles in the finished product which detract from the optimum texture and look of the product.

Chia seed gum provides additional stabilising properties to the meat substitute formulation to control viscosity and ultimately the final texture of the product which is particularly beneficial in the absence of gluten. Chia seed gum can be separated into two fractions, gum with fat (FCG) and partially defatted gum (PDCG).

PDCG has a higher protein, ash and carbohydrate content than FCG, and has higher water binding and water holding capacities. The use of PDCG in the formulations of the present invention and similarly in other meat substitute formulations excluding pumpkin powder may improve the texture and mouthfeel of the final product, both in the cooked and uncooked state due to the additional water-binding properties imparted by the chia seed gum.

FCG has a greater oil-holding capacity and water absorption capacity compared to PDCG and is less viscous than PDCG. These properties may also impart different characteristics on the final product when compared to PDCG. In particular the improved oil-holding capacity may increase the ability of the final product to retain flavour more effectively during the cooking process.

By tailoring the use of the different chia gum fractions to the proposed end use of the meat substitute product the properties of each can be used advantageously. For example, a pre-flavoured product that is ready to cook immediately may be formed using the PDCG, while a product designed to be sold flavourless and have the user introduce their own flavour during the cooking process may be formed using the FCG with the greater oil-holding capacity.

In a further embodiment not according to the invention and present for illustration purpose only, there is also provided an extruded meat substitute product formed from a plant derived protein extract, a lipid, water and chia seed extract, wherein the composition is substantially free of gluten or components derived therefrom. In this embodiment the chia seed extract, preferably gum, improves the texture and mouthfeel of the finished product in the absence of pumpkin powder. The properties of chia seed extract as described in further detail above may result in an improved product over and above those currently known in the art.

The inclusion of pumpkin powder, tomato powder (both according to the invention) and/or chia seed gum (not according to the invention) in an optionally gluten-free and optionally soy-free meat substitute product as disclosed above imparts improved characteristics over such products currently available at the time of filing. It is envisaged that the inclusion of each of these ingredients in varying ratios allows for changes in colour characteristics of the final product, while retaining the improvements in the texture, appearance and flavour of both the cooked and uncooked finished product.

The meat substitute formulations described above have improved texture, mouthfeel and flavour over low or non-allergenic meat substitute products currently available.

Reference to any prior art in this specification is not, and should not be taken as, an acknowledgement or any form of suggestion that that prior art forms part of the common general knowledge in the field of endeavour in any country in the world.

## Claims

1. A method of producing an extruded meat substitute composition, the method comprising
(1) providing an admixture comprising one or more sources of plant protein, one or more sources of lipid, water, and one or more sources of carbohydrate, the one or more sources of carbohydrate comprising fruit or fruit powder, or a combination thereof,
(2) extruding the admixture to produce an extruded meat substitute composition,
the extruded meat substitute composition or admixture comprising on a dry basis about 50 to about 90% by weight of the one or more sources of plant protein powder, and about 1 to about 15% by weight of the one or more sources of carbohydrate, and
the fruit or fruit powder comprising pumpkin or tomato or a combination thereof.

2. A method of claim 1 wherein the admixture before or during extrusion comprises at least about 30 to 75 % by weight water.

3. A method of claim 1 or 2 wherein extrusion is carried out in an extruder comprising two or more barrel sections preceding an extrusion die, and at a temperature of about 100 to 200 °C in one or more of the barrel sections preceding the extrusion die.

4. A method of any one of the preceding claims wherein the one or more sources of plant protein comprises pea protein powder, bean protein powder, chickpea protein powder, or gluten powder, or any combination of any two or more thereof, and the extruded meat substitute composition or admixture comprises, on a dry basis,
(1) about 50 to about 90% by weight pea protein powder, or
(2) about 50 to about 90% broad bean protein powder, or
(3) about 50 to about 90% by weight chickpea protein powder, or
(4) about 50 to about 90% of a mixture of pea protein powder, broad bean protein powder, and gluten powder, or
(5) about 50 to about 90% of a mixture of chickpea protein powder, broad bean protein powder, and gluten powder, or
(6) about 50 to about 90% of a mixture of pea protein powder, chickpea protein powder, and gluten powder, or
(7) about 50 to about 90% of a mixture of pea protein, broad bean protein, chickpea protein powder, and gluten powder.

5. A method of any one of the preceding claims wherein the fruit comprises one or more true berry fruits, one or more *Cucurbitaceae* fruits, one or more *Solanaceae* fruits, one or more *Solanoideae* fruits, one or more citrus fruits, one or more aggregate fruits, one or more multiple fruits, one or more accessory fruits, or any combination of any two or more thereof.

6. A method of any one of the preceding claims wherein the fruit comprises one or more *Cucurbitaceae* fruits, one or more *Solanaceae* fruits, one or more *Solanoideae* fruits, or any combination of any two or more thereof.

7. A method of any one of the preceding claims wherein the fruit or fruit powder comprises pumpkin.

8. A method of any one of the preceding claims wherein the fruit or fruit powder comprises tomato.

9. A method of any one of the preceding claims wherein the extruded meat substitute composition or admixture comprises about 1 to about 15 % by weight on a dry basis of one or more sources of lipid.

10. A method of any one of the preceding claims wherein the extruded meat substitute composition or admixture further comprises about 1 to about 10 % by weight on a dry basis of one or more gums, and/or about 1 to about 10 % by weight on a dry basis of one or more food grade starches

11. A method of any one of the preceding claims wherein the extruded meat substitute composition comprises about 30 to 75 % by weight water.

12. A method of any one of the preceding claims wherein the extruded meat substitute composition comprises a hardness of about 175 to about 800 kPa, when a 4 by 20 by 30 mm portion is subjected to a Warner Bratzler blade shear test from a blade height of 40mm, at a test speed of 1mm.s⁻¹, a pre-test speed of 10mm.s⁻¹ and a post-test speed of 2mm.s⁻¹.

13. A method of any one of the preceding claims wherein the extruded meat substitute composition comprises a tensile strength of about 0.5 to about 10 kPa, when a 4 by 10 by 80 mm portion is subjected to a stretch test clamped between grips 40mm apart, at a test speed of 0.5mm.s⁻¹, a pre-test speed of 1mm.s⁻¹ and a post-test speed of
10mm.s⁻¹.

14. Use of fruit or fruit powder in a method of producing an extruded meat substitute composition to maintain or increase one or more of the tensile strength and hardness of the extruded meat substitute composition, the extruded meat substitute composition comprising on a dry basis about 50 to about 90% by weight of one or more sources of plant protein powder, and about 1 to about 15% by weight of one or more sources of carbohydrate, the one or more sources of carbohydrate comprising fruit or fruit powder, the fruit or fruit powder comprising pumpkin or tomato or a combination thereof.

15. An extruded meat substitute composition comprising one or more sources of plant protein, one or more sources of lipid, one or more sources of carbohydrate, and water, the one or more sources of carbohydrate comprising fruit or fruit powder, or a combination thereof,
the extruded meat substitute composition comprising on a dry basis about 50 to about 90% by weight of the one or more sources of plant protein powder, and about 1 to about 15% by weight of the one or more sources of carbohydrate, and
the fruit or fruit powder comprising pumpkin or tomato or a combination thereof,
the extruded meat substitute composition comprising a hardness of about 175 to about 800 kPa, when a 4 by 20 by 30 mm portion is subjected to a Warner Bratzler blade shear test from a blade height of 40mm, at a test speed of 1mm.s⁻¹, a pre-test speed of 10mm.s⁻¹ and a post-test speed of 2mm.s⁻¹, and a tensile strength of about 0.5 to about 10 kPa, when a 4 by 10 by 80 mm portion is subjected to a stretch test clamped between grips 40mm apart, at a test speed of 0.5mm.s⁻¹, a pre-test speed of 1mm.s⁻¹ and a post-test speed of 10mm.s⁻¹.

## Patentansprüche

1. Verfahren zur Herstellung einer extrudierten Fleischersatzzusammensetzung, wobei das Verfahren umfasst
(1) Bereitstellen einer Beimischung umfassend eine oder mehrere Quellen von Pflanzenprotein, eine oder mehrere Quellen von Lipid, Wasser und eine oder mehrere Quellen von Kohlenhydrat, wobei die eine oder mehreren Quellen von Kohlenhydrat Frucht oder Fruchtpulver oder eine Kombination davon umfassen,
(2) Extrudieren der Beimischung, um eine extrudierte Fleischersatzzusammensetzung herzustellen,
wobei die extrudierte Fleischersatzzusammensetzung oder Beimischung, auf Trockenbasis, etwa 50 bis etwa 90 Gewichts-% der einen oder mehreren Quellen von Pflanzenproteinpulver und etwa 1 bis etwa 15 Gewichts-% der einen oder mehreren Quellen von Kohlenhydrat umfasst, und
die Frucht oder das Fruchtpulver Kürbis oder Tomate oder eine Kombination davon umfasst.

2. Verfahren nach Anspruch 1, wobei die Beimischung vor oder während Extrusion mindestens etwa 30 bis 75 Gewichts-% Wasser umfasst.

3. Verfahren nach Anspruch 1 oder 2, wobei Extrusion in einem Extruder umfassend zwei oder mehr Zylinderabschnitte, die einer Extrusionsdüse vorausgehen, und bei einer Temperatur von etwa 100 bis 200 °C in einem oder mehreren der Zylinderabschnitte, die der Extrusionsdüse vorausgehen, ausgeführt wird.

4. Verfahren nach einem der vorhergehenden Ansprüche, wobei die eine oder mehreren Quellen von Pflanzenprotein Erbsenproteinpulver, Bohnenproteinpulver, Kichererbsenproteinpulver oder Glutenpulver oder beliebige Kombination von beliebigen zwei oder mehr davon umfasst und die extrudierte Fleischersatzzusammensetzung oder Beimischung umfasst, auf Trockenbasis,
(1) etwa 50 bis etwa 90 Gewichts-% Erbsenproteinpulver, oder
(2) etwa 50 bis etwa 90 % Ackerbohnenproteinpulver, oder
(3) etwa 50 bis etwa 90 Gewichts-% Kichererbsenproteinpulver, oder
(4) etwa 50 bis etwa 90 % einer Mischung von Erbsenproteinpulver, Ackerbohnenproteinpulver und Glutenpulver, oder
(5) etwa 50 bis etwa 90 % einer Mischung von Kichererbsenproteinpulver, Ackerbohnenproteinpulver und Glutenpulver, oder
(6) etwa 50 bis etwa 90 % einer Mischung von Erbsenproteinpulver, Kichererbsenproteinpulver und Glutenpulver, oder
(7) etwa 50 bis etwa 90 % einer Mischung von Erbsenprotein, Ackerbohnenprotein, Kichererbsenproteinpulver und Glutenpulver.

5. Verfahren nach einem der vorhergehenden Ansprüche, wobei die Frucht eine oder mehrere echte Beerenfrüchte, eine oder mehrere *Cucurbitaceae-Früchte,* eine oder mehrere *Solanaceae-Früchte,* eine oder mehrere *Solanoideae-*Früchte, eine oder mehrere Zitrusfrüchte, eine oder mehrere Sammelfrüchte, eine oder mehrere Mehrfrüchte, eine oder mehrere Scheinfrüchte oder beliebige Kombination von beliebigen zwei oder mehr davon umfasst.

6. Verfahren nach einem der vorhergehenden Ansprüche, wobei die Frucht eine oder mehrere *Cucurbitaceae-Früchte,* eine oder mehrere *Solanaceae-Früchte,* eine oder mehrere *Solanoideae-*Früchte oder beliebige Kombination von beliebigen zwei oder mehr davon umfasst.

7. Verfahren nach einem der vorhergehenden Ansprüche, wobei die Frucht oder das Fruchtpulver Kürbis umfasst.

8. Verfahren nach einem der vorhergehenden Ansprüche, wobei die Frucht oder das Fruchtpulver Tomate umfasst.

9. Verfahren nach einem der vorhergehenden Ansprüche, wobei die extrudierte Fleischersatzzusammensetzung oder Beimischung etwa 1 bis etwa 15 Gewichts-%, auf Trockenbasis, einer oder mehrerer Quellen von Lipid umfasst.

10. Verfahren nach einem der vorhergehenden Ansprüche, wobei die extrudierte Fleischersatzzusammensetzung oder Beimischung ferner etwa 1 bis etwa 10 Gewichts-%, auf Trockenbasis, eines oder mehrerer Gummis und/oder etwa 1 bis etwa 10 Gewichts-%, auf Trockenbasis, einer oder mehrerer lebensmittelechter Stärken umfasst.

11. Verfahren nach einem der vorhergehenden Ansprüche, wobei die extrudierte Fleischersatzzusammensetzung etwa 30 bis 75 Gewichts-% Wasser umfasst.

12. Verfahren nach einem der vorhergehenden Ansprüche, wobei die extrudierte Fleischersatzzusammensetzung eine Härte von etwa 175 bis etwa 800 kPa umfasst, wenn ein Abschnitt 4 mal 20 mal 30 mm einem Warner-Bratzler-Messer-Schertest aus einer Messerhöhe von 40 mm bei einer Testgeschwindigkeit von 1 mm.s⁻¹, einer Vor-Test-Geschwindigkeit von 10 mm.s⁻¹ und einer Nach-Test-Geschwindigkeit von 2 mm.s⁻¹ unterzogen wird.

13. Verfahren nach einem der vorhergehenden Ansprüche, wobei die extrudierte Fleischersatzzusammensetzung eine Zugfestigkeit von etwa 0,5 bis etwa 10 kPa umfasst, wenn ein Abschnitt 4 mal 10 mal 80 mm einem Dehntest, zwischen 40 mm beabstandeten Greifern gespannt, bei einer Testgeschwindigkeit von 0,5 mm.s⁻¹, einer Vor-Test-Geschwindigkeit von 1 mm.s⁻¹ und einer Nach-Test-Geschwindigkeit von 10 mm.s⁻¹ unterzogen wird.

14. Verwendung von Frucht oder Fruchtpulver in einem Verfahren zur Herstellung einer extrudierten Fleischersatzzusammensetzung, um eine oder mehrere der Zugfestigkeit und Härte der extrudierten Fleischersatzzusammensetzung beizubehalten oder zu erhöhen, wobei die extrudierte Fleischersatzzusammensetzung, auf Trockenbasis, etwa 50 bis etwa 90 Gewichts-% einer oder mehrerer Quellen von Pflanzenproteinpulver und etwa 1 bis etwa 15 Gewichts-% einer oder mehrerer Quellen von Kohlenhydrat umfasst, wobei die eine oder mehreren Quellen von Kohlenhydrat Frucht oder Fruchtpulver umfassen, wobei die Frucht oder das Fruchtpulver Kürbis oder Tomate oder eine Kombination davon umfasst.

15. Extrudierte Fleischersatzzusammensetzung umfassend eine oder mehrere Quellen von Pflanzenprotein, eine oder mehrere Quellen von Lipid, eine oder mehrere Quellen von Kohlenhydrat und Wasser, wobei die eine oder mehreren Quellen von Kohlenhydrat Frucht oder Fruchtpulver oder eine Kombination davon umfassen,
wobei die extrudierte Fleischersatzzusammensetzung, auf Trockenbasis, etwa 50 bis etwa 90 Gewichts-% der einen oder mehreren Quellen von Pflanzenproteinpulver und etwa 1 bis etwa 15 Gewichts-% der einen oder mehreren Quellen von Kohlenhydrat umfasst, und
die Frucht oder das Fruchtpulver Kürbis oder Tomate oder eine Kombination davon umfasst,
wobei die extrudierte Fleischersatzzusammensetzung eine Härte von etwa 175 bis etwa 800 kPa, wenn ein Abschnitt 4 mal 20 mal 30 mm einem Warner-Bratzler-Messer-Schertest aus einer Messerhöhe von 40 mm bei einer Testgeschwindigkeit von 1 mm.s⁻¹, einer Vor-Test-Geschwindigkeit von 10 mm.s⁻¹ und einer Nach-Test-Geschwindigkeit von 2 mm.s⁻¹ unterzogen wird, und eine Zugfestigkeit von etwa 0,5 bis etwa 10 kPa, wenn ein Abschnitt 4 mal 10 mal 80 mm einem Dehntest, zwischen 40 mm beanstandeten Greifern gespannt, bei einer Testgeschwindigkeit von 0,5 mm.s⁻¹, einer Vor-Test-Geschwindigkeit von 1 mm.s⁻¹ und einer Post-Test-Geschwindigkeit von 10 mm.s⁻¹ unterzogen wird, umfasst.

## Revendications

1. Procédé de production d'une composition de substitut de viande extrudé, le procédé comprenant
(1) la fourniture d'un mélange comprenant une ou plusieurs sources de protéine végétale, une ou plusieurs sources de lipide, de l'eau et une ou plusieurs sources de glucide, lesdites une ou plusieurs sources de glucide comprenant un fruit ou une poudre de fruit, ou une combinaison de ceux-ci,
(2) l'extrusion du mélange pour produire une composition de substitut de viande extrudé,
la composition ou le mélange de substitut de viande extrudé comprenant sur une base sèche environ 50 à environ 90 % en poids desdites une ou plusieurs sources de poudre de protéine végétale, et environ 1 à environ 15 % en poids desdites une ou plusieurs sources de glucide, et
le fruit ou la poudre de fruit comprenant de la citrouille ou de la tomate ou une combinaison de celles-ci.

2. Procédé selon la revendication 1, ledit mélange avant ou pendant l'extrusion comprenant au moins environ 30 à 75 % en poids d'eau.

3. Procédé selon la revendication 1 ou 2, ladite extrusion étant effectuée dans une extrudeuse comprenant deux sections de cylindre ou plus avant une filière d'extrusion, et à une température d'environ 100 à 200°C dans une ou plusieurs des sections de cylindre avant la filière d'extrusion.

4. Procédé selon l'une quelconque des revendications précédentes, lesdites une ou plusieurs sources de protéine végétale comprenant une poudre de protéine de pois, une poudre de protéine de haricot, une poudre de protéine de pois chiche ou une poudre de gluten, ou toute combinaison de deux de ces poudres ou plus, et la composition ou le mélange de substitut de viande extrudé comprenant, sur une base sèche,
(1) environ 50 à environ 90 % en poids de poudre de protéine de pois, ou
(2) environ 50 à environ 90 % de poudre de protéine de fève, ou
(3) environ 50 à environ 90 % en poids de poudre de protéine de pois chiche, ou
(4) environ 50 à environ 90 % d'un mélange de poudre de protéine de pois, de poudre de protéine de fève et de poudre de gluten, ou
(5) environ 50 à environ 90 % d'un mélange de poudre de protéine de pois chiche, de poudre de protéine de fève et de poudre de gluten, ou
(6) environ 50 à environ 90 % d'un mélange de poudre de protéine de pois, de poudre de protéine de pois chiche et de poudre de gluten, ou
(7) environ 50 à environ 90 % d'un mélange de poudre de protéine de pois, de protéine de fève, de protéine de pois chiche, et de poudre de gluten.

5. Procédé selon l'une quelconque des revendications précédentes, ledit fruit comprenant une ou plusieurs vraies baies, un ou plusieurs fruits de la famille des *cucurbitacées,* un ou plusieurs fruits de la famille des *solanacées,* un ou plusieurs fruits de la sous-famille des *solanoïdées*, un ou plusieurs agrumes, un ou plusieurs fruits agrégés, un ou plusieurs fruits multiples, un ou plusieurs faux-fruits, ou toute combinaison de deux de ces fruits ou plus.

6. Procédé selon l'une quelconque des revendications précédentes, ledit fruit comprenant un ou plusieurs fruits de la famille des *cucurbitacées,* un ou plusieurs fruits de la famille des *solanacées,* un ou plusieurs fruits de la sous-famille des *solanoïdées*, ou toute combinaison de deux de ces fruits ou plus.

7. Procédé selon l'une quelconque des revendications précédentes, ledit fruit ou ladite poudre de fruit comprenant la citrouille.

8. Procédé selon l'une quelconque des revendications précédentes, ledit fruit ou ladite poudre de fruit comprenant la tomate.

9. Procédé selon l'une quelconque des revendications précédentes, ladite composition ou ledit mélange de substitut de viande extrudé comprenant environ 1 à environ 15 % en poids sur une base sèche d'une ou plusieurs sources de lipide.

10. Procédé selon l'une quelconque des revendications précédentes, ladite composition ou ledit mélange de substitut de viande extrudé comprenant en outre environ 1 à environ 10 % en poids sur une base sèche d'une ou plusieurs gommes, et/ou environ 1 à environ 10 % en poids sur une base sèche d'un ou plusieurs amidons de qualité alimentaire.

11. Procédé selon l'une quelconque des revendications précédentes, ladite composition de substitut de viande extrudé comprenant environ 30 à 75 % en poids d'eau.

12. Procédé selon l'une quelconque des revendications précédentes, ladite composition de substitut de viande extrudé comprenant une dureté d'environ 175 à environ 800 kPa, lorsqu'une portion de 4 par 20 par 30 mm est soumise à un essai de cisaillement par lame Warner-Bratzler à partir d'une hauteur de lame de 40 mm, à une vitesse d'essai de 1 mm.s⁻¹, une vitesse avant essai de 10 mm.s⁻¹ et une vitesse après essai de 2 mm.s⁻¹.

13. Procédé selon l'une quelconque des revendications précédentes, ladite composition de substitut de viande extrudé comprenant une résistance à la traction d'environ 0,5 à environ 10 kPa, lorsqu'une portion de 4 par 10 par 80 mm est soumise à un essai d'étirement serrée entre des pinces écartées de 40 mm, à une vitesse d'essai de 0,5 mm.s⁻¹, une vitesse avant essai de 1 mm.s⁻¹ et une vitesse après essai de 10 mm.s⁻¹.

14. Utilisation d'un fruit ou d'une poudre de fruit dans un procédé de production d'une composition de substitut de viande extrudé pour maintenir ou augmenter une ou plusieurs propriétés parmi la résistance à la traction et la dureté de la composition de substitut de viande extrudé, la composition de substitut de viande extrudé comprenant sur une base sèche environ 50 à environ 90 % en poids d'une ou plusieurs sources de poudre de protéine végétale, et environ 1 à environ 15 % en poids d'une ou plusieurs sources de glucide, lesdites une ou plusieurs sources de glucide comprenant un fruit ou une poudre de fruit, ledit fruit ou ladite poudre de fruit comprenant la citrouille ou la tomate ou une combinaison de celles-ci.

15. Composition de substitut de viande extrudé comprenant une ou plusieurs sources de protéine végétale, une ou plusieurs sources de lipide, une ou plusieurs sources de glucide et de l'eau, lesdites une ou plusieurs sources de glucide comprenant un fruit ou une poudre de fruit, ou une combinaison de ceux-ci,
la composition de substitut de viande extrudé comprenant sur une base sèche environ 50 à environ 90 % en poids desdites une ou plusieurs sources de poudre de protéine végétale, et environ 1 à environ 15 % en poids desdites une ou plusieurs sources de glucide, et
le fruit ou la poudre de fruit comprenant la citrouille ou la tomate ou une combinaison de celles-ci,
la composition de substitut de viande extrudé comprenant une dureté d'environ 175 à environ 800 kPa, lorsqu'une portion de 4 par 20 par 30 mm est soumise à un essai de cisaillement par lame Warner-Bratzler à partir d'une hauteur de lame de 40 mm, à une vitesse d'essai de 1 mm.s⁻¹, une vitesse avant essai de 10 mm.s⁻¹ et une vitesse après essai de 2 mm.s⁻¹, et une résistance à la traction d'environ 0,5 à environ 10 kPa, lorsqu'une portion de 4 par 10 par 80 mm est soumise à un essai d'étirement serrée entre des pinces écartées de 40 mm, à une vitesse d'essai de 0,5 mm.s⁻¹, une vitesse avant essai de 1 mm.s⁻¹ et une vitesse après essai de 10 mm.s⁻¹.
